Europäisches Patentamt

European Patent Office

Office européen des brevets

(19)

(11) **EP 0 695 989 B1**

(12) **FASCICULE DE BREVET EUROPEEN**

(45) Date de publication et mention
de la délivrance du brevet:
**05.06.2002 Bulletin 2002/23**

(51) Int Cl.⁷: **G06F 7/72**

(21) Numéro de dépôt: **95410080.6**

(22) Date de dépôt: **02.08.1995**

(54) **Circuit d'inversion d'éléments d'un corps de galois**

Inversionsschaltung für Galoisfeldelemente

Inversion circuit for galois field elements

(84) Etats contractants désignés:
**DE FR GB IT**

(30) Priorité: **05.08.1994 FR 9409927**

(43) Date de publication de la demande:
**07.02.1996 Bulletin 1996/06**

(73) Titulaire: **STMicroelectronics S.A.**
**92120 Montrouge (FR)**

(72) Inventeur: **Meyer, Jacques**
**F-38700 Corenc (FR)**

(74) Mandataire: **de Beaumont, Michel**
**1bis, rue Champollion**
**38000 Grenoble (FR)**

(56) Documents cités:
**EP-A- 0 364 627          WO-A-89/01660**
**GB-A- 2 155 219**

**Description**

La présente invention concerne les circuits permettant d'effectuer des calculs sur des éléments d'un corps de Galois, et en particulier un circuit permettant de calculer les inverses de ces éléments.

Un corps de Galois est un ensemble fini de nombres binaires servant, par exemple, à la correction d'erreurs dans les transmissions de données grâce à un codage et décodage Reed-Solomon.

L'ensemble des nombres binaires de n bits forme un corps de Galois de $2^n=N+1$ éléments, sur lequel on définit une addition et une multiplication internes, c'est-à-dire telles que la somme ou le produit de deux nombres du corps est également un nombre du corps. L'addition de deux nombres consiste à effectuer un OU exclusif bit par bit entre ces deux nombres. D'où il résulte que, si x est un élément quelconque du corps, on a

$$x+x = 2x = 0.$$

La multiplication est une multiplication classique de deux nombres binaires de n bits tant qu'elle ne génère pas une retenue, c'est-à-dire tant que le résultat ne comporte pas de bits à 1 de poids supérieur à n-1. Dès qu'une retenue est générée, celle-ci est combinée par OU exclusif à des bits prédéterminés des bits de poids 0 à n-1, définis par un polynôme dit polynôme générateur du corps de Galois.

Tout élément non nul du corps de Galois est une puissance d'un autre élément non nul et non unitaire de ce corps. Dans un corps de Galois de N+1 éléments, ces puissances sont définies modulo-N, c'est-à-dire que $x^i=x^{i+N}$, où x est un élément non nul et non unitaire du corps de Galois et i un entier positif ou négatif. Les éléments d'un corps de Galois de N+1 éléments sont notés 0, $\alpha^0$, $\alpha^1$,... $\alpha^{N-1}$. Les éléments $\alpha^0$ à $\alpha^{N-1}$ sont les nombres $2^0$, $2^1$... $2^{N-1}$ constituant la base des nombres binaires de n bits.

Pour calculer des coefficients de correction dans un décodeur Reed-Solomon, il est nécessaire de calculer des rapports y/x, où y et x sont des nombres calculés par le décodeur et pouvant avoir des valeurs quelconques. Pour cela, on multiplie généralement y par l'inverse de x.

Pour calculer un inverse, on peut avoir recours à une table d'inverses stockés dans une mémoire ROM. Toutefois, l'utilisation d'une mémoire ROM se prête mal à une intégration parmi les autres circuits de traitement avec les techniques actuelles de conception de circuit intégré. Avec ces techniques, la mémoire ROM doit être placée en dehors d'une zone où sont intégrés les autres éléments du circuit de traitement. Ceci entraîne une perte de surface notable malgré qu'une mémoire ROM occupe une surface relativement faible.

Une autre solution consiste à obtenir les inverses de manière câblée, à l'aide de portes logiques. Toutefois, le nombre de connexions entre les portes logiques pour effectuer la fonction d'inversion est si important que les métallisations correspondantes occupent une surface équivalente à la surface perdue entraînée par utilisation d'une mémoire ROM, malgré le fait que l'inverseur câblé puisse être intégré dans la même zone que les circuits de traitement.

D'autres solutions sont décrites dans les documents WO-A-89 01660 et GB-A-2 155 219.

Un objet de la présente invention est de prévoir un inverseur d'éléments d'un corps de Galois occupant une surface particulièrement faible.

Cet objet est atteint par un circuit selon la revendication 1.

Selon un mode de réalisation de la présente invention, l'élévateur à la puissance t comprend n groupes de portes dont le i-ème (i = 0, 1... n-1), fournit ou non le i-ème élément non nul du corps de Galois selon l'état 1 ou 0 du i-ème bit du nombre à élever à la puissance t ; et n-1 additionneurs dont le j-ème (j=1, 2... n-1) reçoit la sortie du j-ème groupe de portes et la sortie du (j-1)ème additionneur, le premier additionneur recevant les sorties des deux premiers groupes de portes.

Ces objets, caractéristiques et avantages ainsi que d'autres de la présente invention seront exposés plus en détail dans la description suivante de modes de réalisation particuliers faite à titre non-limitatif à l'aide des figures jointes parmi lesquelles :

la figure 1 représente un circuit d'inversion ;
la figure 2 représente un circuit élévateur à la puissance d'une puissance de deux utilisé dans le circuit d'inversion de la figure 1 ;
la figure 3 représente un mode de réalisation de certains des éléments du circuit de la figure 1 ; et
la figure 4 représente un mode de réalisation selon la présente invention de certains des éléments du circuit de la figure 1.

Comme le décrit notamment WO-A-89 01660, l'inverse $x^{-1}$ d'un nombre x de n bits est exprimé sous la forme :

$$x^{-1} = x^t/x^{t+1}, \qquad (1)$$

avec $t = 2^{n/2}$.

Le nombre $x^t$ est particulièrement facile à calculer, comme on le verra ultérieurement, grâce au fait qu'il s'agit d'un nombre élevé à une puissance d'une puissance de 2 ($t = 2^{n/2}$).

Le nombre $x^{t+1}$ est une racine (t-1)ème de l'unité car

$$(x^{t+1})^{t-1} = x^{t^2-1} = x^{2n-1} = x^N = 1.$$

Par conséquent, $x^{t+1}$, quelle que soit la valeur de x, ne prend que l'une des t-1 valeurs

$$\alpha^{t+1}, \; \alpha^{2(t+1)} ... \; \alpha^{(t-1)\,(t+1)}.$$

Ces t-1 valeurs sont notées ci-après respectivement $\beta$, $\beta^2$, ... $\beta^{t-1}$.

Ainsi, on est amené à calculer l'inverse du nombre $x^{t+1}$ qui n'a que t-1 = $2^{n/2}$-1 valeurs possibles $\beta$, $\beta^2$,... $\beta^{t-1}$ au lieu des $2^n$-1 valeurs possibles de l'inverse d'un nombre quelconque. Par exemple, si n=8, le nombre $x^{t+1}$ a 15 valeurs possibles au lieu de 255. Ainsi, un inverseur du nombre $x^{t+1}$ occupe notablement moins de surface qu'un inverseur d'un nombre quelconque, qu'il soit réalisé à l'aide d'une table en mémoire ROM, ou à l'aide de circuits logiques. En outre, il suffit de ne fournir à cet inverseur que des bits du nombre $x^{t+1}$ qui permettent de distinguer les t-1 valeurs possibles du nombre $x^{t+1}$.

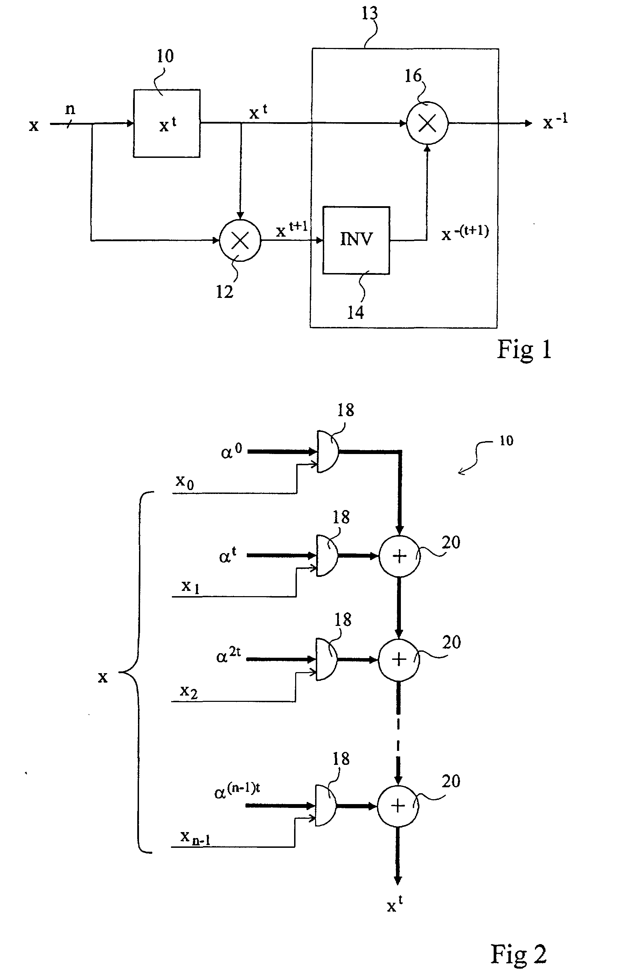

La figure 1 représente un circuit inverseur obtenu directement à l'aide de la décomposition (1) ci-dessus. Le nombre x de n bits, est fourni à un élévateur à la puissance t 10. Un multiplieur 12 reçoit la sortie de l'élévateur 10 sur une première entrée et le nombre x sur une deuxième entrée. Un inverseur 14 reçoit la sortie, $x^{t+1}$, du multiplieur 12 et fournit l'inverse correspondant, $x^{-(t+1)}$, à une première entrée d'un multiplieur 16. Comme on l'a précédemment indiqué, l'inverseur 14 ne doit fournir que t-1 valeurs. Le multiplieur 16 reçoit sur une deuxième entrée la sortie de l'élévateur 10 et fournit l'inverse $x^{-1}$ recherché.

Le circuit 10 élévateur à la puissance t, t étant une puissance de 2, est particulièrement simple à réaliser pour les raisons expliquées ci-dessous.

Le nombre x s'exprime par

$$x = x_0 \cdot \alpha^0 + x_1 \cdot \alpha^1 + x_2 \cdot \alpha^2 + ... \; x_{n-1} \cdot \alpha^{n-1},$$

où $x_0$, $x_1$... $x_{n-1}$ sont les valeurs des bits de poids croissant du nombre x.

En élevant le nombre x à la puissance t, t étant une puissance de 2, on élève le deuxième membre à la puissance t, ce qui fournit la somme de termes $x_i \cdot \alpha^{it}$ et de termes supplémentaires qui se répètent un nombre pair de fois. Du fait que la somme sur le corps de Galois est un OU exclusif bit à bit, tous ces termes supplémentaires s'annulent. Ainsi, on a :

$$x^t = x_0 \cdot \alpha^0 + x_1 \cdot \alpha^t + x_2 \cdot \alpha^{2t} + ... \; x_{n-1} \cdot \alpha^{(n-1)t}.$$

La figure 2 représente un circuit élévateur à la puissance t directement établi à partir de cette équation. A chaque bit $x_i$ (i=0, 1... n-1) est associé un groupe de portes ET 18 qui reçoivent sur des premières entrées le bit $x_i$ et sur des deuxièmes entrées les bits respectifs du

nombre $\alpha^{it}$. Ainsi, chaque nombre $\alpha^{it}$ est transmis sur la sortie du groupe 18 correspondant si $x_i$=1. Un premier additionneur 20 reçoit sur une première entrée la sortie du groupe 18 associé au bit $x_0$ et sur une deuxième entrée la sortie du groupe 18 associé au bit $x_1$. Des additionneurs 20 supplémentaires sont associés respectivement aux groupes 18 restants et chacun reçoit sur une première entrée la sortie du groupe 18 associé et sur une deuxième entrée la sortie de l'additionneur 20 précédent. Le dernier additionneur 20 fournit le nombre $x^t$.

Bien entendu, dans chaque groupe de portes ET 18 associé à un bit $x_i$, on prévoit des portes ET pour les seuls bits non nuls du nombre $\alpha^{it}$. De même, les additionneurs 20 (des groupes de portes OU exclusif) peuvent aussi être simplifiés en tenant compte du fait que certaines de leurs lignes d'entrée sont toujours à un état constant.

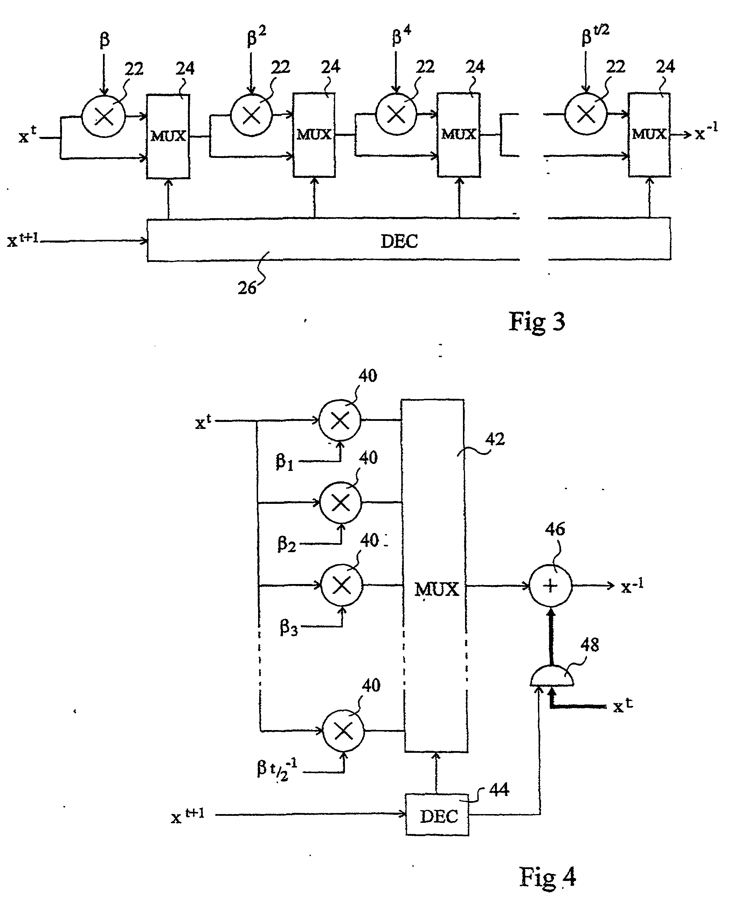

La figure 3 représente un mode de réalisation de circuit destiné à remplacer avantageusement l'inverseur 14 et le multiplieur 16 de la figure 1. Ce circuit comprend n/2 multiplieurs 22 par une constante. Les constantes de multiplication sont respectivement les nombres $\beta^{2i}$, où i varie de 0 à n/2-1.

Chaque multiplieur 22 est associé à un multiplexeur 24 qui reçoit sur un premier canal la sortie du multiplieur et sur un deuxième canal la sortie du multiplexeur précédent, qui est aussi fournie à l'entrée du multiplieur. A l'aide de cette disposition, en sélectionnant convenablement les multiplexeurs 24, on obtient une multiplication par n'importe quelle valeur $\beta^i$, où i varie de 1 à t-1. Le premier multiplieur 22 et premier multiplexeur 24 reçoivent le nombre $x^t$ délivré par l'élévateur 10. Le dernier multiplexeur 24 fournit l'inverse $x^{-1}$ recherché. Un décodeur 26, recevant le nombre $x^{t+1}$ fourni par le multiplieur 12, commande les multiplexeurs 24 de manière que soient mis en série les multiplieurs 22 dont le produit des constantes est égal à l'inverse de $x^{t+1}$.

Le circuit de la figure 3 est particulièrement simple car il utilise des multiplieurs par une constante ; le fait d'en prévoir n/2 avec des multiplexeurs associés reste plus simple que de prévoir un multiplieur complet 16. En outre, le décodeur 26 n'a que n/2 sorties au lieu des n sorties requises dans le cas de la figure 1. Comme dans le cas de la figure 1, pour commander le décodeur 26, on ne lui fournit que des bits du nombre $x^{t+1}$ qui permettent de distinguer les t-1 valeurs possibles du nombre $x^{t+1}$.

Dans certaines applications, la structure de la figure 3 pourrait ne pas être assez rapide car le nombre $x^t$ doit parfois traverser un grand nombre de multiplieurs 22 qui introduisent chacun un retard.

La figure 4 représente un mode de réalisation particulièrement rapide selon la présente invention. Le nombre $x^t$ est fourni en parallèle à t/2 multiplieurs 40 par une constante. Les constantes sont respectivement $\beta_1$ à $\beta_{\frac{1}{2}t-1}$. Les constantes $\beta_1$ à $\beta_{\frac{1}{2}t-1}$ sont $\frac{1}{2}$t-1 racines (t-1) èmes de l'unité distinctes entre elles et de l'unité, et telles que les $\frac{1}{2}$t-1 racines restantes soient $1+\beta_1$ à $1+\beta_{\frac{1}{2}t-1}$.

En effet, sur un corps de Galois, si un nombre r est racine p-ième de l'unité, le nombre r+1 l'est aussi (p étant un entier quelconque inférieur à N+1).

Un multiplexeur 42 reçoit les sorties des multiplieurs 40 et sélectionne l'une d'entre elles en fonction d'un signal de commande fourni par un décodeur 44. La sortie du multiplexeur 42 est fournie à une première entrée d'un additionneur 46 recevant sur une deuxième entrée la sortie d'un groupe de portes ET 48. Une première entrée des portes 48 reçoit une sortie du décodeur 44, qui prend un état dépendant de la parité de l'inverse du nombre $x^{t+1}$.

Les deuxièmes entrées des portes 48 reçoivent respectivement les bits du nombre $x^t$. Ainsi, le nombre $x^t$ est sommé ou non à la sortie du multiplexeur 42 selon les valeurs du nombre $x^{t+1}$. Avec cette configuration, on multiplie $x^t$ par $\beta_i$ ou $1+\beta_i$ ($i=1, 2... \frac{1}{2}t-1$), c'est-à-dire par l'une ou l'autre de deux racines $(t-1)$èmes distinctes de l'unité. Le décodeur 44, en fonction des n-1 bits de poids fort du nombre $x^{t+1}$ sélectionne le multiplieur 40 adéquat pour que le nombre $\beta_i$ ou $1+\beta_i$ par lequel le nombre $x^t$ est finalement multiplié soit l'inverse du nombre $x^{t+1}$. En outre, le décodeur reçoit seulement des bits du nombre $x^{t+1}$ qui permettent de distinguer les $\frac{1}{2}t-1$ racines $\beta_1$ à $\beta_{\frac{1}{2}t-1}$.

Bien entendu, parmi les racines $(t-1)$èmes de l'unité, il y a l'unité. Si le nombre $x^{t+1}$ est égal à 1, le nombre $x^t$ est aussi égal à 1, alors, par exemple, le multiplexeur 42 est sélectionné pour fournir le nombre 0 à l'additionneur 46 qui fournit alors la valeur $1/(x^t)$ par l'intermédiaire du groupe de portes 48.

**Revendications**

1. Circuit d'inversion d'un nombre (x) de n bits d'un corps de Galois de $2^n = N+1$ éléments, comprenant :

   - un élévateur (10) à la puissance $t = 2^{n/2}$ recevant le nombre à inverser (x) ;
   - un premier multiplieur complet (12) recevant le nombre à inverser et la sortie de l'élévateur à la puissance t ; et
   - un circuit (14, 16) pour fournir le produit de la sortie de l'élévateur à la puissance t et de l'inverse de la sortie du premier multiplieur complet ;

   **caractérisé en ce que** ledit circuit pour fournir le produit comprend :

   - $\frac{1}{2}t-1$ multiplieurs (40) par une constante, dont les constantes sont des racines $(t-1)$èmes distinctes entre elles et de l'unité, recevant chacune la sortie de l'élévateur (10) à la puissance t ;
   - un multiplexeur (42) commandé par un décodeur (44) pour sélectionner la sortie de l'un des multiplieurs par une constante en fonction de la sortie du premier multiplieur complet (12) ; et

   - un additionneur recevant la sortie du multiplexeur et, selon la sortie du premier multiplieur complet, la valeur 0 ou le nombre à inverser (x) élevé à la puissance t.

2. Circuit inverseur selon la revendication 1, **caractérisé en ce que** l'élévateur (10) à la puissance t comprend :

   - n groupes de portes (18) dont le i-ème ($i = 0, 1... n-1$), fournit ou non le i-ème élément non nul du corps de Galois selon l'état 1 ou 0 du i-ème bit du nombre à élever à la puissance t ; et
   - n-1 additionneurs (20) dont le j-ème ($j=1, 2... n-1$) reçoit la sortie du j-ème groupe de portes et la sortie du $(j-1)$ème additionneur, le premier additionneur recevant les sorties des deux premiers groupes de portes.

**Patentansprüche**

1. Schaltung zum Invertieren einer Zahl (x) von n Bits eines Galois-Körpers bzw. -felds von $2^n = N+1$ Elementen, wobei die Schaltung umfaßt:

   - eine Potenziervorrichtung bzw. -schaltung (10) zum Erheben in die Potenz $t = 2^{n/2}$, welcher die zu invertierende Zahl (x) zugeführt wird;
   - einen ersten Komplett- bzw. Voll-Multiplikator (12), welchem die zu invertierende Zahl (x) und die Ausgangsgröße der Potenzierschaltung zur Erhebung in die Potenz t zugeführt werden;
   - eine Schaltung (14,16) zur Bildung des Produkts aus der Ausgangsgröße der Potenzierschaltung in die Potenz t und dem Invers- bzw. Reziprokwert der Ausgangsgröße des ersten Komplettbzw. Voll-Multiplikators;

   **dadurch gekennzeichnet, daß** die Schaltung zur Bildung des Produkts umfaßt:

   - 1/2t-1 Multiplikatoren (40) zur Multiplikation mit einer Konstanten, deren Konstanten jeweils voneinander und von eins verschiedene $(t-1)$te Wurzeln sind und deren jeder jeweils die Ausgangsgröße der Potenzierschaltung (10) zur Potenz t zugeführt wird;
   - einen durch einen Dekoder (44) gesteuerten Multiplexer (42) zur Wahl der Ausgangsgröße eines der Konstanten-Multiplikatoren in Abhängigkeit von der Ausgangsgröße des ersten Komplett-bzw. Voll-Multiplikators (12); sowie
   - eine Addiervorrichtung, welcher die Ausgangsgröße des Multiplexers und, je nach der Ausgangsgröße des ersten Komplett- bzw. Voll-Multiplikators, der Betrag 0 oder die zur Potenz t erhobene zu invertierende Zahl (x) zugeführt werden.

2. Invertierschaltung nach Anspruch 1, **dadurch gekennzeichnet, daß** die Potenziervorrichtung (10) in die Potenz t umfaßt:

- n Gruppen von Gateschaltungen (18), deren i-te (i=0,1.. ..n-1) das i-te von Null verschiedene Element des Galois-Körpers bzw. -felds bildet oder nicht bildet, je nach dem Zustand 1 oder 0 des i-ten Bits der in die Potenz t zu erhebenden Zahl; sowie
- n-1 Addiervorrichtungen (20), deren j-ter (j=1,2...n-1) die Ausgangsgröße der j-ten Gruppe von Gate-Schaltungen und die Ausgangsgröße der j-ten Addiervorrichtung zugeführt werden,

wobei die erste Addiervorrichtung die Ausgangsgrößen der beiden ersten Gruppen von Gateschaltungen zugeführt erhält.

**Claims**

1. A circuit for inverting a number (x) of n bits of a finite field of $2^n = N+1$ elements, comprising:

- a circuit (10) for raising to the power $t = 2^{n/2}$, receiving the number to invert (x);
- a first complete multiplier (12) receiving the number to invert and the output of the circuit for raising to the power t; and
- a circuit (14, 16) for providing the product of the output of the circuit for raising to the power t and of the inverse of the output of the first complete multiplier;

**characterized in that** said circuit for providing the product comprises:

- 1/2t-1 multipliers (40) for multiplying by a constant, whose constants are (t-1)th roots of the unit, distinct one from the other and from the unit, each receiving the output of the circuit (10) for raising to the power t;
- a multiplexer (42) controlled by a decoder (44) for selecting the output of one of the multipliers by a constant as a function of the output of the first complete multiplier (12), and
- an adder receiving the output of the multiplexer and, depending upon the output of the first complete multiplier, value 0 or the number to invert (x) raised to the power t.

2. The circuit of claim 1, **characterized in that** the circuit (10) for raising to the power t comprises:

- n groups of gates (18), the i-th group (i=0, 1... n-1) providing or not the i-th non-zero element of the finite field depending upon the state 1 or 0 of the i-th bit of the number to be raised to the power t; and
- n-1 adders (20), the j-th adder (j=1, 2... n-1) receiving the output of the j-th group of gates and the output of the (j-1)th adder, the first adder receiving the outputs of the first two groups of gates.

Fig 1

Fig 2

Fig 3

Fig 4